# EUROPEAN PATENT SPECIFICATION

(11) **EP 1 633 090 B1**
(45) Date of publication and mention of the grant of the patent: **29.02.2012**
(21) Application number: 05019084.2
(22) Date of filing: 02.09.2005
(51) Int. Cl.: H04W 36/02

(54) **Mobile control system, mobile control method, mobile control device and mobile control program**
Mobilsteuersystem, Mobilsteuerverfahren, Mobilsteuervorrichtung und Mobilsteuerprogramm
Système, méthode, dispositif et programme de gestion mobile

(30) Priority: 07.09.2004 JP 2004259567
(43) Date of publication of application: 08.03.2006
(73) Proprietor: NTT DoCoMo, Inc., Tokyo 100-6150 (JP)
(72) Inventor: Nishimura, Kenji, Int. Prop. Dpt, NTT DoCoMo,Inc, Chiyuda-ku, Tokyo 100-6150 (JP); Isobe, Shin-ichi, Int. Prop. Dpt, NTT DoCoMo,Inc, Chiyuda-ku, Tokyo 100-6150 (JP); Okagawa, Takatoshi, Int. Prop Dpt, NTT DoCoMo,Inc., Chiyuda-ku, Tokyo 100-6150 (JP)
(74) Representative: Henseler, Daniela

(56) References cited:
- US-A1- 2002 147 832

## Description

The present invention relates to a mobile communication system which utilizes mobile (communication) terminals such as mobile phones or automobile telephones, and in particular to a mobile control system, a mobile control method, a mobile control device and a mobile control program.

In mobile communication systems utilizing mobile terminals such as mobile phones or automobile telephones, various technologies (mobile control services) have been proposed for such purposes as guaranteeing reliability of communication or reachability of data, or ensuring efficient communication like in US 2002/0147832.

For instance, in JP2003-258842A described below, effective transfer of data is ensured by updating the routing information of a router according to changes in the location area of a mobile communication terminal.

Meanwhile, the mobile control service described in JP2003-69617A below realizes a handover without data loss before and after handover (hereinafter referred to as "buffering handover control") by buffering data at any of the routers within an exchange network when a mobile terminal performs a handover between base stations.

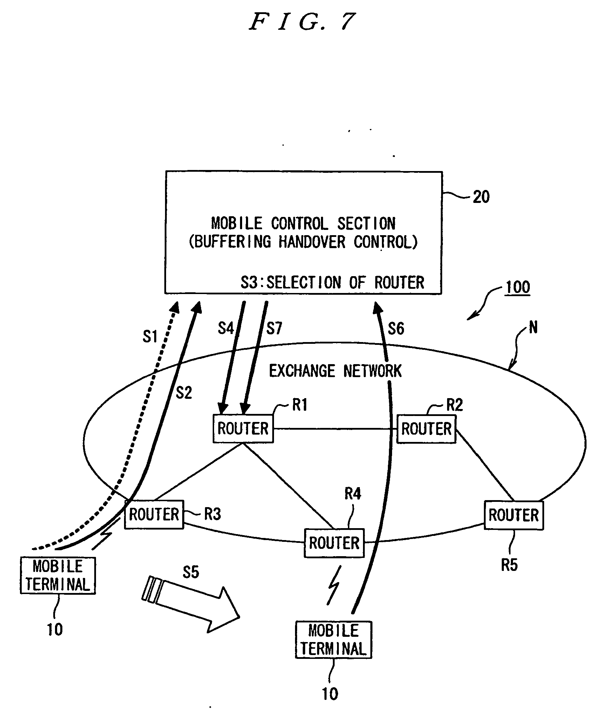

FIG. 7 shows a general outline of this mobile control service referred to as "buffering handover control".

In FIG. 7, reference numeral 100 is an overall configuration of a conventional and typical mobile communication system. Reference numeral 10 are mobile terminals comprising the mobile communication system 100; reference character N is an exchange network comprising a plurality of routers R1, R2 to RN which communicably connects the mobile terminals 10; reference numeral 20 is a mobile control section which controls the exchange network N and the mobile terminals 10; and reference characters S1 to S6 are the flow of controls or information originating from the mobile control section 20.

As shown in FIG. 7, a mobile terminal 10 first requests the mobile control section 20 via the exchange network N to perform buffering handover control (S1) and notifies the start of a handover (S2). The mobile control section 20 then selects a router R1 within the exchange network N which will function as a buffer point for the buffering handover control for the mobile terminal 10 (S3), and sends an instruction message to the selected router R1 instructing that the mobile control section 20 will buffer data addressed to the mobile terminal 10.

Incidentally, information regarding request to perform buffering handover control (S1) may be retained in advance in the mobile control section 20 during, for example, signing of the user's agreement of the mobile terminal 10. In this case, the request to perform buffering handover control (S1) is omitted. Also, another method exists wherein the exchange network N automatically detects the commencement of the handover of the mobile terminal 10 and notifies the mobile control section 20, instead of a handover notification from the mobile terminal 10 (S2).

When the handover of the mobile terminal 10 is actually concluded (S5), the mobile control section 20 recognizes the fact via the exchange network N (S6), and then gives the previously selected router R1 instruction to send data, buffered in advance, to the mobile terminal 10 after handover (S7).

Thus, since the buffered data reliably reaches the mobile terminal 10 after handover, handover without data loss before and after handover is realized.

Moreover, in addition to such mobile control services referred to as "buffering handover control", the present inventors have previously proposed a mobile control service referred to as "moving network control" (for instance, Japanese Patent Application No. 2003-28539).

This "moving network control" is a mobile control service which enables, by ensuring that data for a moving network (a plurality of mobile terminals which exist in a limited area and move together as a group, such as a group of mobile terminals which exist on a train) is always passed through a predetermined router (anchor router) which serves as a control point of an exchange network N, instructions for changes in a routing route upon handover of the moving network to be given only to the predetermined router.

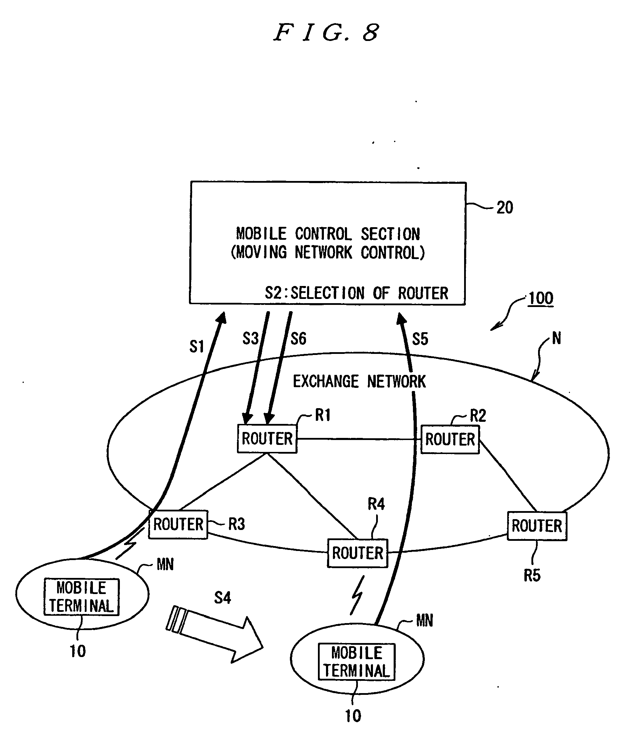

FIG. 8 shows a general outline of this mobile control service referred to as a "moving network control".

As shown in FIG. 8, firstly, when the mobile control section 20 recognizes via the exchange network N that a mobile terminal 10 has entered a predetermined target moving network MN (S1), the mobile control section 20 selects a predetermined router R1 within the exchange network N from the communication pathway of the mobile terminal 10 and the communication pathways of the other mobile terminals (not shown) of the moving network MN (S2), and sends instructions to the router R1 to perform routing control of the moving network MN (S3). Then, when the moving network MN completes its handover from the communication area of router R3 to the communication area of router R4 (S4), the mobile control section 20 recognizes the completed handover via the exchange network N (S5), and then gives the router R1 instructions to update routing information to the moving network MN (S6).

Thus, efficient control is realized, whereby it is now sufficient to send instructions for changing routing route to only one router R1, as compared to conventional methods which required the instructions to be respectively sent to each router along the communication pathway of each mobile terminal 10.

Incidentally, various mobile control services such as those described above are more likely to be performed simultaneously on a mobile terminal 10 or an exchange network N, rather than each performed individually.

For instance, in order to realize a handover of a moving network MN without data loss, the mobile control section 20 must simultaneously perform a buffering handover control, such as described above, in addition to a moving network control, such as described above.

However, presently, since these mobile control services are basically performed individually, control at the mobile control section 20 becomes more and more complicated as the number of simultaneously performed mobile control services increase, and give rise to new problems such as conflicting instruction messages.

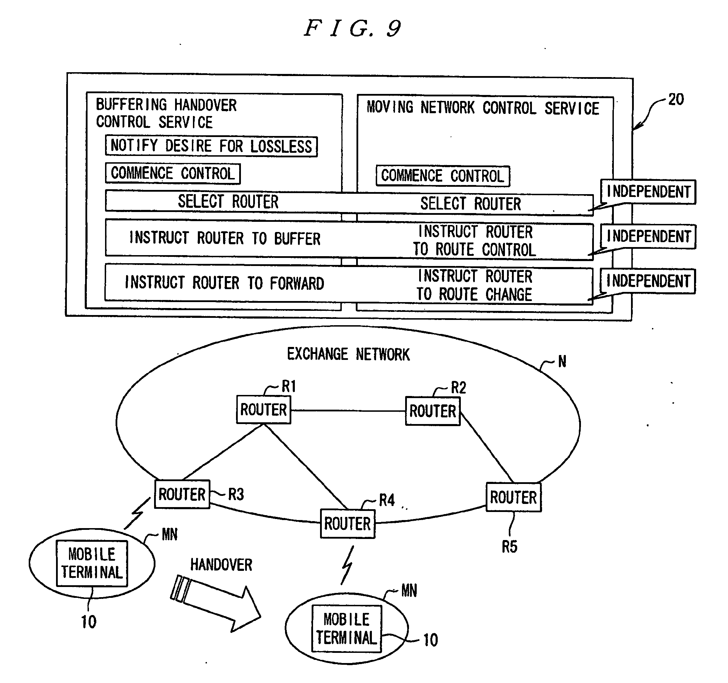

In other words, as shown in FIG. 9, when a moving network MN performs a handover, conventionally routers are independently selected for both the buffering handover control and the moving network control, and in some cases different routers end up being selected. As a result, a plurality of control points for a mobile terminal 10 exists within the exchange network N, making control complicated.

In addition, when a plurality of instructions (buffering, forwarding, route control, route change etc.) is sent to the same router from the two controls regarding an instruction from the mobile control section 20 to the exchange network N, since each instruction message is sent independently, the transmission is inefficient.

It is the object of the present invention to effectively solve the above problems, and to provide a new mobile control system, a mobile control method, a mobile control device and a mobile control program which realizes efficient control when simultaneously performing a plurality of mobile control services on mobile terminals or exchange networks.

In order to solve the above problems, a mobile control system according to the features of claim 1 is provided.

A mobile control method according to the features of claim 2 is provided.

A mobile control device in accordance with claim 3 is provided.

A mobile control program in accordance with claim 4 is provided.

According to the mobile control system of the invention, since the integration control means further provides control so as to integrate the controls regarding each mobile control service when controls regarding the plurality of the mobile control services regarding the same mobile terminal from each mobile control service means are performed on the exchange network either simultaneously or within a predetermined time, it becomes possible to simultaneously perform and coordinate a plurality of mobile controls, thereby increasing efficiency of control.

When the mobile control system integrates controls regarding each mobile control service so that the integration control means of the mobile control services are performed on the same router when each mobile control service can be performed on any router comprising an exchange network of the anchor router, simplification of control regarding routers can be achieved.

When the integration control means of the mobile control section integrates each control and transmits to the same router when the controls regarding each mobile control service are for the same router among the plurality of routers comprising the exchange network, efficiency of send/receive procedures and the like of the controls such as instruction messages can be increased.

When each of the mobile control services includes a mobile control service regarding buffering handovers and a mobile control service regarding moving networks, controls such as selection of the router regarding these mobile control services, buffering and forwarding to the router, route control instructions and route change instructions can be integrated and performed. Thus, simplification of router control regarding a mobile terminal, such as according to invention 2, and improvement of efficiency of send/receive procedures and the like of the controls such as instruction messages regarding a mobile terminal, such as according to invention 3, can be achieved.

When it becomes possible to simultaneously coordinate and operate a plurality of mobile controls, efficient control can be achieved in a similar fashion as the mobile control system of the invention.

A simplification of router control regarding a mobile terminal can be achieved, too. Further, efficiency of send/receive procedures and the like of the controls such as instruction messages can be increased.

When it becomes possible to simultaneously coordinate and operate a plurality of mobile controls, efficient control can be achieved.

Additionally, simplification of router control regarding one mobile terminal can be achieved and efficiency of send/receive procedures and the like of the controls such as instruction messages can be increased.

According to the mobile control program it becomes possible to simultaneously coordinate and operate a plurality of mobile controls, efficient control can be achieved. In addition, since efficient control can be achieved on software using a computer system, it becomes possible to realize efficient control in a simpler and more economic fashion as compared to realizing each means by configuring dedicated hardware. Furthermore, improvement of functions and other version upgrades can be easily achieved by merely updating a portion of the program. Further advantages as explained in connection with the mobile control system of the invention are achievable, too.

The invention will now be described in connection with embodiments as shown in the attached drawings.

FIG. 1 is an overall schematic diagram showing an embodiment of a mobile control system according to the invention.

FIG. 2 is a block diagram showing a hardware configuration of a mobile control section (device) according to the invention.

FIG. 3 is a schematic diagram showing a flow of controls (instructions) at a mobile control system according to the invention.

FIG. 4 is a flowchart showing a flow of the processing of an integration control means.

FIG. 5 is a flowchart showing a flow of the processing at a mobile control service means (buffering handover).

FIG. 6 is a flowchart showing a flow of the processing at a mobile control service means (moving network).

FIG. 7 is a schematic diagram showing a flow of controls of an independently performed conventional mobile control service regarding a buffering handover.

FIG. 8 is a schematic diagram showing a flow of controls of an independently performed conventional mobile control service regarding a moving network.

FIG. 9 is a schematic diagram showing a flow of controls when a conventional mobile control service regarding a buffering handover and a conventional mobile control service regarding a moving network are simultaneously performed.

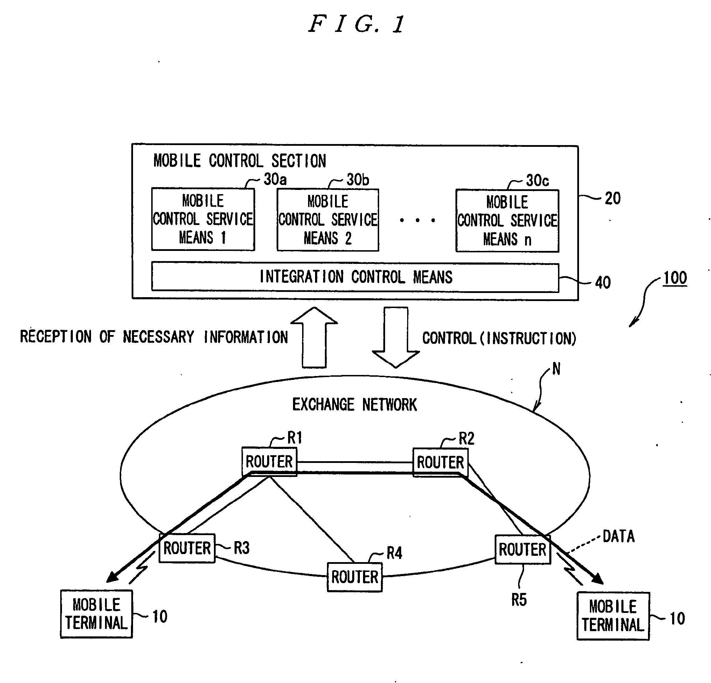

As shown in Fig. 1, the mobile control system 100 is mainly comprised of an exchange network N constructed from a plurality of routers R1 to R5 etc. for communicably connecting a plurality of mobile terminals 10, and a mobile control section 20 constructed from a server etc. in order to manage and control the exchange network N. The mobile control section 20 receives the location areas of the mobile terminals 10 and various information necessary for controls such as data transmission request, and based on the received information, performs controls (instructions) necessary for routing information and various mobile control services on the routers R1 to R5 or the mobile terminals 10 etc. via the exchange network N.

The mobile control section 20 is mainly comprised of a plurality of mobile control service means 30a to 30n, and an integration control means 40 which functions as an interface which relays all controls or information between each of the mobile control service means 30a to 30n and the exchange network N.

As described above, each of the mobile control service means 30a to 30n are for providing specific mobile control services for achieving such objectives as guaranteeing reliability of communication or reachability of data, or ensuring efficient communication, and are designed to retain information necessary to provide each mobile control service, such as the position of router R, at each mobile terminal 10.

In addition to functioning as an interface with the exchange network N, the integration control means 40 is designed to provide a function to control so as to integrate each of the plurality of mobile control services when the plurality of mobile control services regarding the same mobile terminal 10 is performed on the exchange network N by each of the mobile control service means 30a to 30n simultaneously or within a predetermined time. Detailed specific examples regarding the integration control by the integration control means 40 will be described later.

Meanwhile, the exchange network N is comprised of routers R (in the present embodiment, R3 to R5) provided for each base station communicating with each mobile terminal 10, as is conventional, and a plurality of relaying routers R (in the present embodiment R1 and R2) to which the routers R are respectively connected, and mobile control regarding each mobile terminal 10 is performed by the mobile control section 20 via any one of the routers R.

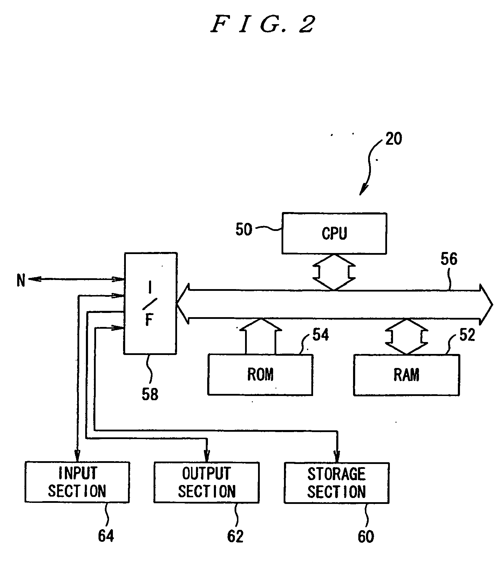

As shown in Fig. 2, the mobile control section 20 is configured by connecting between a CPU (central processing unit) 50 which is responsible for various controls and arithmetic processing, a RAM (random access memory) 52 which comprises the main memory unit (main storage), and a ROM (read only memory) 54 which is a read only storage device with a bus 56 comprised of a PCI (peripheral component interconnect) bus and an ISA (industrial standard architecture) bus etc., and connecting to the bus 56 via an input/output interface (I/F) 58 a storage section 60 comprising external memory devices (secondary storage) such as a hard disk drive (HDD), an input section 64 comprising input devices such as a keyboard or a mouse, an output section 62 comprising output devices such as a LCD monitor, and an exchange network N etc.

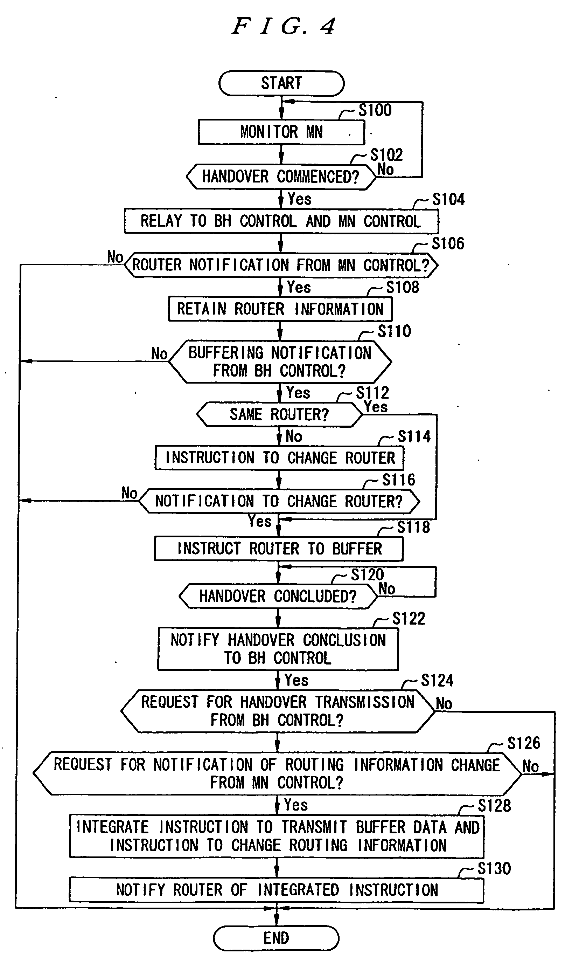

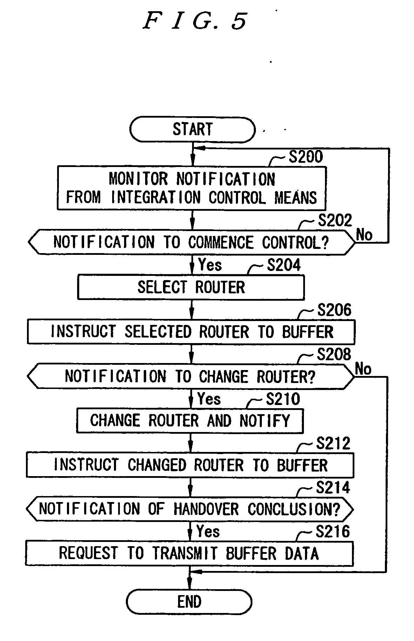

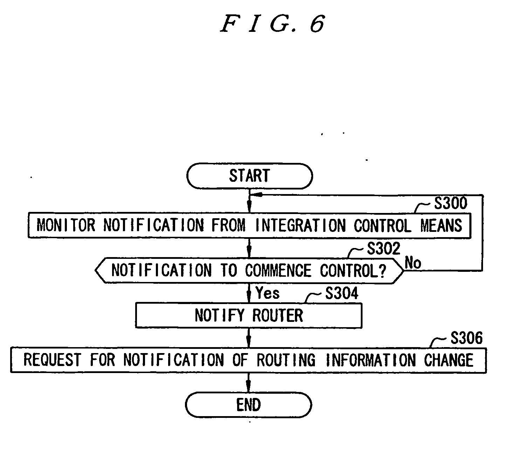

When power is turned on, programs regarding the mobile control services and programs for various controls stored in the ROM 54 etc. are read and loaded onto the RAM 52. Then, by having the CPU 50 perform predetermined arithmetic processing and various controls according to instructions written in the programs loaded onto the RAM 52, controls regarding specific mobile control services at the various mobile control service means 30a to 30n, as shown in the flowcharts of FIG. 5 and FIG. 6, as well as integration control processing at the integration control means 40, as shown in the flowchart of FIG. 4, are achieved.

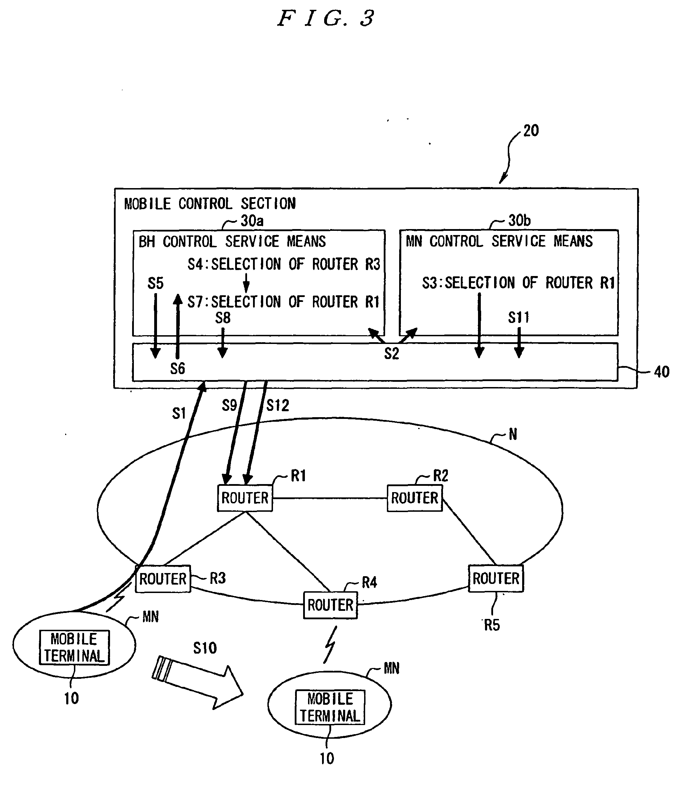

Next, an example of a mobile control method by a mobile control system 100 thusly configured will be explained, mainly using the schematic diagram of FIG. 3 as reference.

FIG. 3 shows an example wherein, among the mobile control service means 30a to 30n, a mobile control service means which provides a mobile control service regarding the above-described buffering handover control (hereinafter arbitrarily referred to as "BH control service means 30a"), and a mobile control service means which provides a mobile control service regarding the above-described moving network control (hereinafter arbitrarily referred to as "MN control service means 30b") are simultaneously performed.

It is assumed that a mobile terminal 10, which is the object of services by the BH control service means 30a and the MN control service means 30b, exists in a moving network MN under a router (in the present embodiment, router R3) comprising an exchange network N, and that the MN control service means 30b already recognizes as such. It is also assumed that a router R1 has been already selected as an anchor router to the router R3, and is in use. It is further assumed that the BH control service means 30a realizes that the mobile terminal 10 is requesting a buffering handover.

The control in the event of a handover of a moving network MN, in which the moving terminal 10 exists, from under router R3 to under router R4 will be described below.

As shown, when the moving network MN, in which the moving terminal 10 exists, handovers from under router R3 to under router R4, the integration control means 40 of the mobile control section 20 first receives information to the effect that the handover will commence from the exchange network N or via the exchange network N (S1).

Upon receiving this information, the integration control means 40 relays the information to the BH control service means 30a and the MN control service means 30b, and prompts commencement of the controls by each of the means (S2). Incidentally, it is needless to say that the integration control means 40 does not relay the information or give instructions prompting commencement of control when the mobile terminal 10 is not the object of services by the BH control service means 30a and the MN control service means 30b.

The integration control means 40 then soon receives a notice from the MN control service means 30b which received the notification of the information that the anchor router which serves as a control point of the moving network MN is router R1 (S3), and retains this information.

At the same time, at the BH control service means 30a, an anchor router is selected (S4), and a notification instructing the selected anchor router to buffer data addressed to the mobile terminal 10 is sent from the BH control service means 30a to the integration control means 40 (S5). Incidentally, it is assumed that the selected anchor router is router R3 (S4).

In consideration of the fact that the router R1 has already been selected as an anchor router to serve as a control point regarding the control services by the MN control service means 30b to the same mobile terminal 10, and that it is beneficial to use the same anchor router for both the BH control service means 30a and the MN control service means 30b, the integration control means 40 receiving such instructions from the BH control service means 30a instructs the BH control service means 30a to select router R1 as the anchor router (S6).

Upon receiving this instruction, the BH control service means 30a changes the anchor router to router R1 (S7), and notifies the integration control means 40 as such (S8). The notified integration control means 40 then notifies the changed router R1 to buffer the data of the mobile terminal 10 (S9).

When the moving network MN, in which the mobile terminal 10 exists, actually moves to under router R4 and the handover is concluded (S10), the BH control service means 30a, having received notification to that effect, requests the integration control means 40 to notify the mobile terminal 10 of the forwarding of buffered data for router R1. Having received this request, the integration control means 40, since it is aware that the MN integration control service means 30b is simultaneously running in addition to the BH control service means 30a, waits for a predetermined amount time for a notification or an instruction request from the MN integration control service means 30b, instead of immediately carrying out the request single-handedly.

Once the waiting period exceeds the predetermined amount of time, the integration control means 40 will no longer wait for a notification or an instruction request from the MN control service means 30b and proceeds to single-handedly perform the request from the BH control service 30a. Conversely, when there is a notification or an instruction request, such as a request for notification to router R1 regarding changing routing information to the moving network MN, from the MN control service means 30b during the waiting period (S11), the integration control means 40 combines the instructions for both controls into one control (or instruction message) and notifies a single router R2 accordingly, since the instruction requests for both controls are for the same router R1 (S12).

In this fashion, since controls (or instruction messages) conventionally performed separately is integrated, efficient control is achieved.

FIG. 4 is a flowchart showing the processing flow at the integration control means 40 during such control, while FIG. 5 is the processing flow at the BH control service means 30a, and FIG. 6 is the processing flow at the MN control service means 30b.

First, as shown in FIG. 4, when a program regarding the integration control means 40 is loaded from the ROM 54 shown in FIG. 2 to the RAM 52 and executed at the CPU 50, in the first step S100 the integration control means 40 monitors via an exchange network N the behavior of a moving network MN which is the object, and determines whether or not the moving network MN will commence handover based on information sent from the exchange network N (determination step S102). When it is determined that the handover has not yet commenced (No), monitoring of the moving network MN is continued as is. Meanwhile, when it is determined that the moving network MN has commenced its handover (Yes), the routine proceeds to the next step S104, and the integration control means 40 notifies (relays) the BH control service means 30a and the MN control service means 30b as such, and notifies each control service means 30a and 30b to commence their respective controls.

Meanwhile, since all information reaching the BH control service means 30a is relayed by the integration control means 40, and no information is sent directly from the exchange network N and the like, the BH control service means 30a constantly monitors the presence or absence of notifications from the integration control means 40 as shown in FIG. 5 (step S200), and when there is a notification from the integration control means 40, the routine proceeds to the next step S202 to determine whether or not the notification is a notification prompting commencement of control for a buffering handover. When it is determined that the notification is not a notification prompting commencement of control for a buffering handover (No), processing corresponding to the notification is executed, and at the same time monitoring of the presence or absence of notifications from the integration control means 40 is continued as is (step S200). Meanwhile, when it is determined that the notification is a notification prompting commencement of control for a buffering handover (Yes), the routine proceeds to the next step S204, and a router to handle data buffering is selected. At the same time, the routine proceeds to the next step S206 and instructs (requests) to send a notification to the integration control means 40 to buffer the data to the selected router.

On the other hand, similarly, since no information is sent directly from the exchange network N and the like to the MN control service means 30b, the MN control service means 30b constantly monitors the presence or absence of notifications from the integration control means 40 as shown in FIG. 6 (step S300), and when there is a notification from the integration control means 40, the routine proceeds to the next step S302 to determine whether or not the notification is a notification prompting commencement of control for a moving network MN. When it is determined that the notification is not a notification prompting commencement of control for a moving network MN (No), processing corresponding to the notification is executed, and at the same time monitoring of the presence or absence of notifications from the integration control means 40 is continued as is (step S300). Meanwhile, when it is determined that the notification is a notification prompting commencement of control for a moving network (Yes), the routine proceeds to the next step S304, and a notification is sent to the integration control means notifying the anchor router of the moving network MN. At the same time, the routine proceeds to the next step S306 and requests the transmission of a notification to the integration control means 40 to change the routing information of the anchor router, thereby ending processing.

Next, as shown in step S106 in FIG. 4, among the mobile control service means 30a and 30b for which notification prompting commencement of control has already been forwarded, the integration control means 40 first determines from the MN control service means 30b whether or not a notification of an anchor router of the moving network MN has arrived, and if it is determined that the notification has arrived (Yes), the routine proceeds to the next step S108 and retains the router information.

Then, the routine proceeds to the next step S110 to determine from the BH control service means 30a whether or not a notification which notifies buffering of data to the selected router has arrived. When it is determined that the notification has arrived (Yes), the routine proceeds to the next step S112 to determine whether or not the router notified from the mobile control service means 30b regarding MN control is the same as the router selected by the mobile control service means 30a regarding BH control.

As a result, when it is determined that both routers are the same (Yes), the routine jumps to step S118. However, when it is determined that the two routers are not the same (No), the routine proceeds to the next step S114 to send an instruction to the BH control service means 30a to change the selected router to the router notified from the MN control service means 30b.

Meanwhile, at the BH control service means 30a, the presence or absence of a notification from the integration control means 40 regarding changing the router is determined in step S208 shown in FIG. 5. When it is determined that there is a router change notification (Yes), the routine proceeds to the next step S210 and changes the router, and at the same time requests the integration control means 40 to issue instructions to the changed router to perform buffering. Incidentally, when it is determined in this step S208 that there is no router change notification from the integration control means 40 within a predetermined period of time (No), it is determined that the selected router is the same as the router notified from the MN control service means 30b, thereby ending processing..

Next, as shown in step S116 in FIG. 4, the integration control means 40 determines whether there is a router change notification from the BH control service means 30a which issued a router change notification. When it is determined that there is a router change notification (Yes), the routine proceeds to the next step S118 and issues an instruction to the changed router to perform buffering. Incidentally, when a negative determination (No) is obtained in the steps S106, S110 and S116 shown in FIG. 4, the integration control means 40 either determines that it is unnecessary to integrate (coordinate) the controls of the BH control service means 30a and the MN control service means 30b, or determines that it is impossible to integrate (coordinate) the controls of the BH control service means 30a and the MN control service means 30b, and thereby ends processing. In addition, when it is determined in the step S106 shown in FIG. 4 that there is no notification from the MN control service means 30b (No), the routine may skip the next step S 108 and jump to the step after the next S110 and continue processing.

The integration control means 40 then determines whether the handover of the moving network MN has concluded or not, based on information from the exchange network N, and when it is determined that the handover has concluded (Yes), the routine proceeds to the next step S122 and issues a notification to the BH control service means 30a notifying that the handover has concluded.

Meanwhile, in step S214 in FIG. 5, the BH control service means 30a determines whether the notification notifying conclusion of the handover has been issued. When it is determined that the notification has been issued (Yes), a request is made to the integration control means 40 to send the buffered data to the changed router, thereby ending the entire processing.

Next, as shown as a determination step S124 in FIG. 4, the integration control means 40 determines whether there was a request for buffer data transmission from the BH control service means 30a, and when it is determined that there was no request for buffer data transmission (No), the processing is concluded as is. On the other hand, when it is determined that there was a request for buffer data transmission (Yes), the routine proceeds to the next step S126 to determine whether there was a request for changing routing information from the MN control service means 30b. When it is determined that there was no request for changing routing information (No), the processing is concluded as is. On the other hand, when it is determined that there was a request for changing routing information (Yes), the routine proceeds to the next step S128 to integrate the request for changing routing information and the above-mentioned request for buffer data transmission as one instruction information. Then, in the next step S130, the processing is concluded by sending the integrated instruction to a predetermined router.

In this fashion, when simultaneously applying a plurality of mobile control services to mobile terminals or exchange networks and the like, by integrating and performing the controls or instruction messages, the present invention is able to achieve economical and efficient control as compared to performing the controls independently.

Incidentally, while the present embodiment describes a mobile control service regarding buffering handovers and a mobile control service regarding a moving network as examples of mobile control services subjected to control integration, the mobile control services applicable to the present invention are not restricted to these examples, and it is possible to apply any kind of mobile control service such as a soft handover method, a multicast method, a hierarchical mobile IPv6 method, and a fast handover method.

Furthermore, while the various mobile control service means 30 and the integration control means 40 of the mobile control section 20, which are the characterizing portions of the present invention, can be realized by dedicated hardware such as ASIC (application specific integrated circuit) and the like, they can also be realized by a computer system and software as described above. When using software, indirect transfer or leasing can be achieved via storage media such as a CD-ROM or a DVD-ROM, while direct transfer or leasing can be achieved by downloading via networks such as the Internet.

## Claims

1. A mobile control system (100) comprising:
an exchange network (N) including a plurality of routers (R1, R2, R3, R4, R5) connected for communicably connecting a plurality of mobile terminals (10); and
a mobile control section (20) which manages and controls said exchange network (N), wherein:
the mobile control section (20) comprises:
buffering handover control service means (30a); moving network control service means (30b); and integration control means (40),
**characterized in that**
the buffering handover control service means (30a) is adapted to provide a moving control service relating to buffering handover to the plurality of mobile terminals (10);
the moving network control service means (30b) is adapted to provide a moving control service relating to a moving network to the plurality of mobile terminals (10); and
the integration control means (40) is adapted to relay the moving control service relating to the buffering handover from the buffering handover control service means (30a) and the moving control service relating to the moving network from the moving network control service means (30b) to the exchange network (N), wherein
the integration control means (40), when the moving control service relating to the buffering handover from the buffering handover control service means (30a) and the moving control service relating to the moving network from the moving network control service means (30b) are performed on the exchange network (N) either simultaneously or within a predetermined time, is further adapted to integrate the moving control service relating to the buffering handover and the moving control service relating to the moving network on one and the same router serving as an anchor router of the plurality of routers (R1, R2, R3, R4, R5).

2. A mobile control method which manages and controls an exchange network (N) including a plurality of routers (R1, R2, R3, R4, R5) connected for communicably connecting a plurality of mobile terminals (10),
**characterized by**
the method comprises, when a moving control service relating to buffering handover and a moving control service relating to a moving network are performed on the exchange network (N) either simultaneously or within a predetermined time, integrating the moving control service relating to the buffering handover and the moving control service relating to the moving network on one and the same router serving as an anchor router of the plurality of routers (R1, R2, R3, R4, R5).

3. A mobile control device (20) which manages and controls an exchange network (N) including a plurality of routers (R1, R2, R3, R4, R5) connected for communicably connecting a plurality of mobile terminals (10); wherein
the mobile control device (20) comprises:
buffering handover control service means (30a), moving network control service means (30b); and integration control means (40),
**characterized in that**
the buffering handover control service means (30a) is adapted to provide a moving control service relating to buffering handover to the plurality of mobile terminals (10);
the moving network control service means (30b) is adapted to provide a moving control service relating to a moving network to the plurality of mobile terminals (10); and
the integration control means (40) is adapted to relay the moving control service relating to the buffering handover from the buffering handover control service means (30a) and the moving control service relating to the moving network from the moving control service means (30b) to the exchange network (N), wherein
the integration control means (40), when the moving control service relating to the buffering handover from the buffering handover control service means (30a) and the moving control service relating to the moving network from the moving network control service means (30b) are performed on the exchange network (N) either simultaneously or within a predetermined time, is further adapted to integrate
the moving control service relating to the buffering handover and the moving control service relating to the moving network on one and the same router serving as an anchor router of the plurality of routers (R1, R2, R3, R4, R5).

4. A mobile control program which manages and controls an exchange network (N) including a plurality of routers (R1, R2, R3, R4, R5) connected for communicably connecting a plurality of mobile terminals (10),
the mobile control program being **characterized by**
causing a computer to execute a process comprising:
providing a moving control service relating to buffering handover to the plurality of mobile terminals (10);
providing a moving control service relating to a moving network to the plurality of mobile terminals (10);
relaying the moving control service relating to the buffering handover and the moving control service relating to the moving network to the exchange network (N), and
when the moving control service relating to the buffering handover from the buffering handover control service means (30a) and the moving control service relating to the moving network from the moving network control service means (30b) are performed on the exchange network (N) either simultaneously or within a predetermined time, integrating the moving control service relating to the buffering handover and the moving control service relating to the moving network on one and the same router serving as an anchor router of the plurality of routers (R1, R2, R3, R4, R5).

## Patentansprüche

1. Mobilsteuersystem (100), das umfasst:
ein Tauschnetz (N), das mehrere Router (R1, R2, R3, R4, R5) enthält, die geschaltet sind, um mehrere mobile Endgeräte (10) kommunikationsfähig zu verbinden; und
einen Mobilsteuerabschnitt (20), der das Tauschnetz (N) verwaltet und steuert, wobei:
der Mobilsteuerabschnitt (20) umfasst:
Dienstmittel (30a) zur Steuerung einer gepufferten Verbindungsübergabe; Dienstmittel (30b) zur Steuerung eines beweglichen Netzes; und Integrations-Steuerungsmittel (40),
**dadurch gekennzeichnet, dass**
die Dienstmittel (30a) zur Steuerung einer gepufferten Verbindungsübergabe dazu ausgelegt sind, einen beweglichen Steuerungsdienst in Bezug auf die gepufferte Verbindungsübergabe an die mehreren mobilen Endgeräte (10) zu schaffen;
die Dienstmittel (30b) zur Steuerung eines beweglichen Netzes dazu ausgelegt sind, einen beweglichen Steuerungsdienst in Bezug auf ein bewegliches Netz für die mehreren mobilen Endgeräte (10) zu schaffen; und
die Integrations-Steuerungsmittel (40) dazu ausgelegt sind, den beweglichen Steuerungsdienst in Bezug auf die gepufferte Verbindungsübergabe von den Dienstmitteln (30a) zur Steuerung einer gepufferten Verbindungsübergabe und den beweglichen Steuerungsdienst in Bezug auf das bewegliche Netz von den Dienstmitteln (30b) zur Steuerung eines beweglichen Netzes an das Tauschnetz (N) weiterzugeben, wobei
die Integrations-Steuerungsmittel (40) dann, wenn der bewegliche Steuerungsdienst in Bezug auf die gepufferte Verbindungsübergabe von den Dienstmitteln (30a) zur Steuerung einer gepufferten Verbindungsübergabe und der bewegliche Steuerungsdienst in Bezug auf das bewegliche Netz von den Dienstmitteln (30b) zur Steuerung eines beweglichen Netzes in dem Tauschnetz (N) entweder gleichzeitig oder innerhalb einer vorgegebenen Zeit ausgeführt werden, des Weiteren dazu ausgelegt sind, den beweglichen Steuerungsdienst in Bezug auf die gepufferte Verbindungsübergabe und den beweglichen Steuerungsdienst in Bezug auf das bewegliche Netz in ein- und demselben Router, der als ein Ankerrouter für die mehreren Router (R1, R2, R3, R4, R5) dient, zu integrieren.

2. Mobilsteuerverfahren, das ein Tauschnetz (N) verwaltet und steuert, das mehrere Router (R1, R2, R3, R4, R5) enthält, die geschaltet sind, um mehrere mobile Endgeräte (10) kommunikationsfähig zu verbinden,
**dadurch gekennzeichnet, dass**
das Verfahren dann, wenn ein beweglicher Steuerungsdienst in Bezug auf eine gepufferte Verbindungsübergabe und ein beweglicher Steuerungsdienst in Bezug auf ein bewegliches Netz in dem Tauschnetz (N) entweder gleichzeitig oder innerhalb einer vorgegebenen Zeit ausgeführt werden, das Integrieren des beweglichen Steuerungsdienstes in Bezug auf eine gepufferte Verbindungsübergabe und des beweglichen Steuerungsdienstes in Bezug auf das bewegliches Netz in ein- und demselben Router, der als ein Ankerrouter der mehreren Router (R1, R2, R3, R4, R5) dient, umfasst.

3. Mobilsteuervorrichtung (20), die ein Tauschnetz (N) verwaltet und steuert, das mehrere Router (R1, R2, R3, R4, R5) umfasst, die geschaltet sind, um mehrere mobile Endgerät (10) kommunikationsfähig zu verbinden; wobei
die Mobilsteuervorrichtung (20) umfasst:
Dienstmittel (30a) zur Steuerung einer gepufferten Verbindungsübergabe, Dienstmittel (30b) zur Steuerung eines beweglichen Netzes; und Integrations-Steuerungsmittel (40),
**dadurch gekennzeichnet, dass**
die Dienstmittel (30a) zur Steuerung einer gepufferten Verbindungsübergabe dazu ausgelegt sind, einen beweglichen Steuerungsdienst in Bezug auf eine gepufferte Verbindungsübergabe an die mehreren mobilen Endgeräte (10) zu schaffen;
die Dienstmittel (30b) zur Steuerung eines beweglichen Netzes dazu ausgelegt sind, einen beweglichen Steuerungsdienst in Bezug auf ein bewegliches Netz für die mehreren mobilen Endgeräte (10) zu schaffen; und
die Integrations-Steuermittel (40) dazu ausgelegt sind, den beweglichen Steuerungsdienst in Bezug auf die gepufferte Verbindungsübergabe von den Dienstmitteln (30a) zur Steuerung einer gepufferten Verbindungsübergabe und den beweglichen Steuerungsdienst in Bezug auf das bewegliche Netz von den Dienstmitteln (30b) der beweglichen Steuerung an das Tauschnetz (N) weiterzugeben, wobei
die Integrations-Steuermittel (40) dann, wenn der bewegliche Steuerungsdienst in Bezug auf die gepufferte Verbindungsübergabe von den Dienstmitteln (30a) zur Steuerung einer gepufferten Verbindungsübergabe und der bewegliche Steuerungsdienst in Bezug auf ein bewegliches Netz von den Dienstmitteln (30b) einer beweglichen Steuerung entweder gleichzeitig oder innerhalb einer vorgegebenen Zeit in dem Tauschnetz (N) ausgeführt werden, des Weiteren dazu ausgelegt sind,
den beweglichen Steuerungsdienst in Bezug auf die gepufferte Verbindungsübergabe und den beweglichen Steuerungsdienst in Bezug auf ein bewegliches Netz in ein- und demselben Router, der als ein Ankerrouter der mehreren Router (R1, R2, R3, R4, R5) dient, zu integrieren.

4. Mobilsteuerungsprogramm, das ein Tauschnetz (N) verwaltet und steuert, das mehrere Router (R1, R2, R3, R4, R5) enthält, die geschaltet sind, um mehrere mobile Endgeräte (10) kommunikationsfähig zu verbinden,
wobei das Mobilsteuerungsprogramm **gekennzeichnet ist durch**:
Bewirken, dass ein Computer einen Prozess ausführt, der umfasst:
Schaffen eines beweglichen Steuerungsdienstes in Bezug auf eine gepufferte Verbindungsübergabe für die mehreren mobilen Endgeräte (10);
Schaffen eines beweglichen Steuerungsdienstes in Bezug auf ein bewegliches Netz für die mehreren mobilen Endgeräte (10);
Weitergeben des beweglichen Steuerungsdienstes in Bezug auf eine gepufferte Verbindungsübergabe und des beweglichen Steuerungsdienstes in Bezug auf ein bewegliches Netz an das Tauschnetz (N), und
wenn der bewegliche Steuerungsdienst in Bezug auf die gepufferte Verbindungsübergabe von den Dienstmitteln (30a) zur Steuerung einer gepufferten Verbindungsübergabe und der bewegliche Steuerungsdienst in Bezug auf ein bewegliches Netz von den Dienstmitteln (30b) zur Steuerung eines beweglichen Netzes entweder gleichzeitig oder innerhalb einer vorgegebenen Zeit in dem Tauschnetz (N) ausgeführt werden, Integrieren des beweglichen Steuerungsdienstes in Bezug auf die gepufferte Verbindungsübergabe und des beweglichen Steuerungsdienstes in Bezug auf ein bewegliches Netz in ein- und demselben Router, der als ein Ankerrouter der mehreren Router (R1, R2, R3, R4, R5) dient.

## Revendications

1. Un système de contrôle mobile (100) comprenant:
un réseau d'échange (N), qui comprend plusieurs routeurs (R1, R2, R3, R4, R5) connectés pour mettre en communication plusieurs terminaux mobiles (10); et
une section de contrôle mobile (20) pour gérer et contrôler ledit réseau d'échange (N), pour lequel:
la section de contrôle mobile (20) comprend:
des moyens (30a) de service de contrôle du transfert intercellulaire à sauvegarde intermédiaire; des moyens (30b) de service de contrôle du réseau mobile; et des moyens (40) de contrôle d'intégration,
**caractérisé en ce que**
les moyens (30a) de service de contrôle du transfert intercellulaire à sauvegarde intermédiaire, sont adaptés pour fournir un service de contrôle mobile concernant un transfert intercellulaire à sauvegarde intermédiaire de plusieurs terminaux mobiles (10);
les moyens (30b) de service de contrôle du réseau mobile, sont adaptés pour fournir un service de contrôle mobile concernant un réseau mobile à plusieurs terminaux mobiles (10); et
les moyens (40) de contrôle d'intégration, sont adaptés pour relayer le service de contrôle mobile concernant le transfert intercellulaire à sauvegarde intermédiaire depuis les moyens (30a) de service de contrôle du transfert intercellulaire à sauvegarde intermédiaire et le service de contrôle mobile concernant le réseau mobile depuis les moyens (30b) de service de contrôle du réseau mobile, au réseau d'échange (N), pour lequel
les moyens (40) de contrôle d'intégration, lorsque le service de contrôle mobile concernant le transfert intercellulaire à sauvegarde intermédiaire depuis les moyens (30a) de service de contrôle du transfert intercellulaire à sauvegarde intermédiaire, et le service de contrôle mobile concernant le réseau mobile depuis les moyens (30b) de service de contrôle du réseau mobile, sont effectués sur le réseau d'échange (N) soit simultanément, soit dans une période de temps prédéterminée, sont en outre adaptés pour intégrer le service de contrôle mobile concernant le transfert intercellulaire à sauvegarde intermédiaire et le service de contrôle mobile concernant le réseau mobile sur un même routeur, qui est utilisé comme un routeur d'ancrage de plusieurs routeurs (R1, R2, R3, R4, R5).

2. Un procédé de contrôle mobile pour gérer et contrôler un réseau d'échange (N), qui comprend plusieurs routeurs (R1, R2, R3, R4, R5) connectés pour mettre en communication plusieurs terminaux mobiles (10),
**caractérisé en ce que**
le procédé comprend, lorsqu'un service de contrôle mobile concernant un transfert intercellulaire à sauvegarde intermédiaire et un service de contrôle mobile concernant un réseau mobile, sont effectués sur le réseau d'échange (N) soit simultanément, soit dans une période de temps prédéterminée, intégrant le service de contrôle mobile concernant le transfert intercellulaire à sauvegarde intermédiaire et le service de contrôle mobile concernant le réseau mobile sur un même routeur, qui est utilisé comme un routeur d'ancrage de plusieurs routeurs (R1, R2, R3, R4, R5).

3. Un dispositif de contrôle mobile (20) pour gérer et contrôler un réseau d'échange (N), qui comprend plusieurs routeurs (R1, R2, R3, R4, R5) connectés pour mettre en communication plusieurs terminaux mobiles (10); pour lequel
le dispositif de contrôle mobile (20) comprend:
des moyens (30a) de service de contrôle du transfert intercellulaire à sauvegarde intermédiaire; des moyens (30b) de service de contrôle du réseau mobile; et des moyens (40) de contrôle d'intégration,
**caractérisé en ce que**
les moyens (30a) de service de contrôle du transfert intercellulaire à sauvegarde intermédiaire, sont adaptés pour fournir un service de contrôle mobile concernant un transfert intercellulaire à sauvegarde intermédiaire de plusieurs terminaux mobiles (10);
les moyens (30b) de service de contrôle du réseau mobile, sont adaptés pour fournir un service de contrôle mobile concernant un réseau mobile à plusieurs terminaux mobiles (10); et
les moyens (40) de contrôle d'intégration, sont adaptés pour relayer le service de contrôle mobile concernant le transfert intercellulaire à sauvegarde intermédiaire depuis les moyens (30a) de service de contrôle du transfert intercellulaire à sauvegarde intermédiaire et le service de contrôle mobile concernant le réseau mobile depuis les moyens (30b) de service de contrôle du réseau mobile, au réseau d'échange (N), pour lequel
les moyens (40) de contrôle d'intégration, lorsque le service de contrôle mobile concernant le transfert intercellulaire à sauvegarde intermédiaire depuis les moyens (30a) de service de contrôle du transfert intercellulaire à sauvegarde intermédiaire, et le service de contrôle mobile concernant le réseau mobile depuis les moyens (30b) de service de contrôle du réseau mobile, sont effectués sur le réseau d'échange (N) soit simultanément, soit dans une période de temps prédéterminée, sont en outre adaptés pour intégrer
le service de contrôle mobile concernant le transfert intercellulaire à sauvegarde intermédiaire et le service de contrôle mobile concernant le réseau mobile sur un même routeur, qui est utilisé comme un routeur d'ancrage de plusieurs routeurs (R1, R2, R3, R4, R5).

4. Un programme de contrôle mobile pour gérer et contrôler un réseau d'échange (N), qui comprend plusieurs routeurs (R1, R2, R3, R4, R5) connectés pour mettre en communication plusieurs terminaux mobiles (10),
le programme de contrôle mobile étant **caractérisé** pour imposer à un ordinateur d'exécuter un procédé, qui comprend les étapes:
de fournir un service de contrôle mobile concernant un transfert intercellulaire à sauvegarde intermédiaire à plusieurs terminaux mobiles (10);
de fournir un service de contrôle mobile concernant un réseau mobile à plusieurs terminaux mobiles (10);
de relayer le service de contrôle mobile concernant le transfert intercellulaire à sauvegarde intermédiaire et le service de contrôle mobile concernant le réseau mobile au réseau d'échange (N), et
lorsque le service de contrôle mobile concernant le transfert intercellulaire à sauvegarde intermédiaire depuis les moyens (30a) de service de contrôle du transfert intercellulaire à sauvegarde intermédiaire et le service de contrôle mobile concernant le réseau mobile depuis les moyens (30b) de service de contrôle du réseau mobile sont effectués sur le réseau d'échange (N) soit simultanément, soit dans une période de temps prédéterminée, intégrant le service de contrôle mobile concernant le transfert intercellulaire à sauvegarde intermédiaire et le service de contrôle concernant le réseau mobile sur un même routeur, qui est utilisé comme un routeur d'ancrage de plusieurs routeurs (R1, R2, R3, R4, R5).
